# DEMANDE DE BREVET EUROPEEN

(11) **EP 1 006 632 A1**
(43) Date de publication de la demande: **07.06.2000**
(21) Numéro de dépôt: 99402951.0
(22) Date de dépôt: 26.11.1999
(51) Int. Cl.: H02G 1/14, H02G 15/18

(54) **Dispositif de maintien en expansion d'un manchon élastique, et procédé et dispositif de mise en expansion d'un manchon élastique**

(30) Priorité: 02.12.1998 FR 9815216
(71) Demandeur: SAGEM S.A., 75116 Paris (FR)
(72) Inventeur: Grossoleil, Thierry, 77130 Forges (FR)
(74) Mandataire: Fruchard, Guy

(57) **Abrégé**

Le dispositif de maintien en expansion comporte un organe de maintien tubulaire (23) disposé à l'intérieur du manchon élastique (33), un organe de verrouillage (35) disposé à l'extérieur du manchon élastique, et des moyens de fixation amovibles (29, 37) de l'organe de maintien à l'organe de verrouillage.

## Description

La présente invention concerne un dispositif de maintien en expansion d'un manchon élastique ainsi qu'un procédé et un dispositif de mise en expansion d'un manchon élastique.

On sait que les manchons thermorétractables utilisés en particulier pour la protection d'une jonction de câbles électriques ou pour la protection d'une extrémité de câble électrique sont remplacés par des manchons élastiques se rétractant à froid, ce qui implique leur mise en expansion préalablement à leur mise en place sur une jonction de câbles ou une extrémité de câble.

On connaît FR-A-2 742 597 un dispositif de mise en expansion et de maintien en expansion d'un manchon élastique, ce dispositif comportant plusieurs jeux d'organes de mise en expansion ayant une surface externe conique, les différents jeux étant introduits successivement et de façon télescopique dans le manchon élastique pour provoquer une expansion progressive de celui-ci.

Un tel dispositif est utilisable sur un chantier pour réaliser ponctuellement l'expansion d'un manchon élastique mais peut difficilement être utilisé de façon industrielle pour réaliser en usine la mise en expansion de séries importantes de manchons élastiques. En outre, ce dispositif étant destiné à être utilisé sur un chantier, il n'est prévu aucune disposition pour son stockage.

Un but de l'invention est de proposer un dispositif de maintien en expansion d'un manchon élastique permettant un stockage prolongé de celui-ci ainsi qu'un procédé et un dispositif de mise en expansion permettant une mise en oeuvre industrielle.

Selon l'invention on propose un dispositif de maintien en expansion d'un manchon élastique, ce dispositif comportant un organe de maintien tubulaire disposé à l'intérieur du manchon élastique, un organe de verrouillage disposé à l'extérieur du manchon élastique, et des moyens de fixation amovible de l'organe de maintien à l'organe de verrouillage.

Ainsi, l'organe de verrouillage et l'organe de maintien réalisent un ensemble rigide permettant de stocker le manchon élastique en expansion sans risquer un échappement de l'organe de maintien sous l'effet de la pression exercée par le manchon élastique sur la surface de l'organe de maintien, tout en maintenant un libre accès à l'intérieur du manchon élastique pour sa mise en place sur un article à protéger tel une jonction de câbles électriques ou une extrémité de câble électrique.

Selon une version avantageuse de l'invention, les moyens de fixation amovibles comprennent des ergots portés par des languettes de l'organe de maintien et coopérant avec des lumières dans l'organe de verrouillage, de préférence l'organe de maintien comporte deux languettes disposées à chaque extrémité de façon symétrique par rapport à l'axe longitudinal de l'organe de maintien. Ainsi l'organe de maintien est libéré par une simple pression sur les languettes et la disposition symétrique des languettes permet de manoeuvrer celles-ci avec deux doigts d'une main de sorte que le retrait de l'organe de maintien peut être réalisé tout en assurant aisément un positionnement satisfaisant du manchon élastique par rapport à l'article à recouvrir.

Selon un autre aspect avantageux de l'invention, l'organe de verrouillage est tubulaire et a de préférence des extrémités découpées pour délimiter des lamelles flexibles. Ainsi, l'organe de verrouillage peut servir tout à la fois de conditionnement pour le manchon élastique en expansion et d'organe de protection mécanique du manchon élastique après la mise en place de celui-ci.

D'autres caractéristiques et avantages de l'invention apparaîtront à la lecture de la description qui suit d'un mode de réalisation particulier non limitatif de l'invention, en référence aux figures ci-jointes parmi lesquelles :
- la figure 1 est une vue en élévation simplifiée partiellement en coupe longitudinale du dispositif de mise en expansion selon l'invention dans une phase initiale du procédé de mise en expansion selon l'invention,
- les figures 2 à 4 sont des représentations analogues à celle de la figure 1 dans différentes phases du procédé de mise en expansion selon l'invention,
- la figure 5 est une vue en perspective partiellement écorchée du dispositif de maintien en expansion à la sortie du dispositif de mise en expansion,
- la figure 6 est une vue en perspective de l'organe de verrouillage,
- la figure 7 est une vue en élévation avec une demi-vue en coupe longitudinale du dispositif de maintien en expansion selon l'invention prêt pour un stockage.

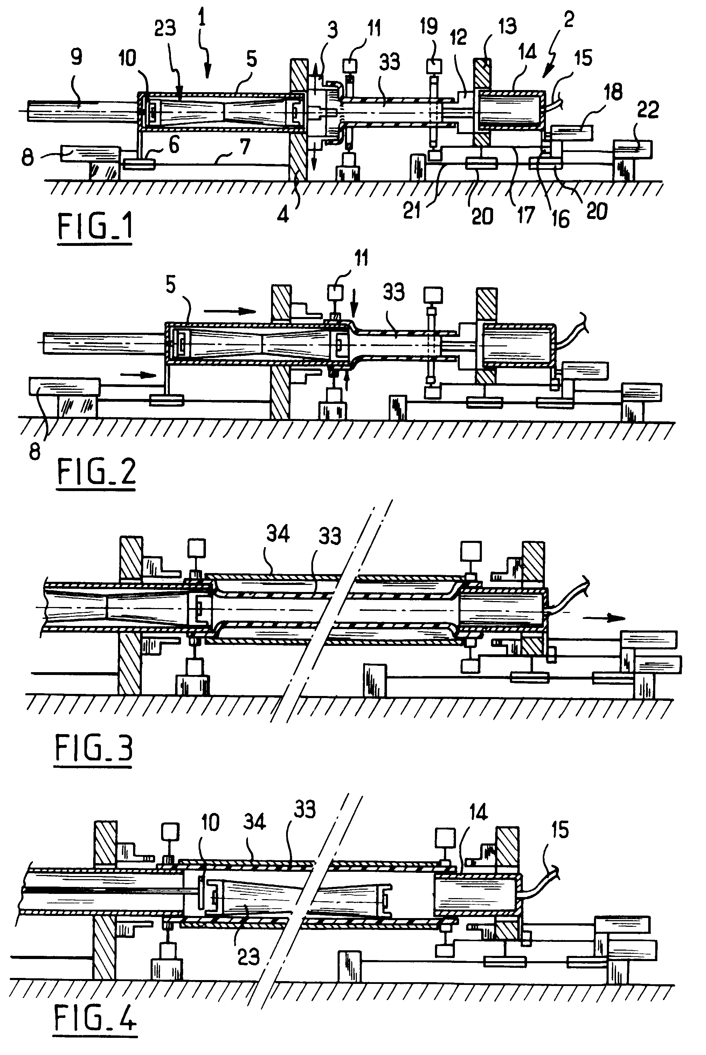

En référence à la figure 1, le dispositif de mise en expansion d'un manchon élastique selon l'invention comporte deux ensembles 1, 2, disposés en vis-à-vis. L'ensemble 1 comporte un jeu de mors 3 montés sur un bâti fixe 4 pour être mobiles radialement autour d'une ouverture du bâti 4 dans laquelle un tube borgne 5 est monté pour coulisser. Le tube borgne 5 est porté par une bague 6 montée pour coulisser sur une tige de guidage 7, les mouvements du tube borgne 5 étant commandés par un vérin 8. L'extrémité du tube borgne 5 adjacente au jeu de mors 3 est ouverte tendis que l'extrémité opposée est fermée de façon étanche. Cette extrémité est traversée par la tige d'un vérin de manoeuvre 9 fixé au tube borgne 5 et associé à un piston 10 disposé à l'intérieur du tube borgne 5. L'ensemble 1 comporte également un organe de cerclage 11 adjacent au jeu de mors 3 sur un côté de celui-ci opposé au tube borgne 5.

Le second ensemble 2 comporte un jeu de mors 12 portés par un bâti 13 et mobiles radialement par rapport à une ouverture du bâti 13 dans laquelle est engagé un tube borgne 14 ayant une extrémité ouverte adjacente au jeu de mors 12 et une extrémité opposée fermée de façon étanche et reliée à une conduite d'alimentation 15 reliée à une source de gaz sous pression non représentée. Le tube borgne 14 est porté par une bague 16 montée sur une tige de guidage 17 fixée au bâti 13. Les mouvements du tube borgne 14 par rapport au bâti 13 sont commandés par un vérin 18. Un organe de cerclage 19 est relié au bâti 13 dans une position adjacente au jeu de mors 12 sur un côté de celui-ci opposé au tube borgne 14. Le bâti 13 et les éléments qui lui sont associés sont portés par des bagues 20 montées pour coulisser sur une tige de guidage 21 convenablement fixée au sol. Le mouvement du bâti 13 et des éléments qui lui sont associés est commandé par un vérin 22.

Préalablement à la mise en expansion d'un manchon élastique, un organe de maintien généralement désigné en 23 est disposé à l'intérieur du tube borgne 5.

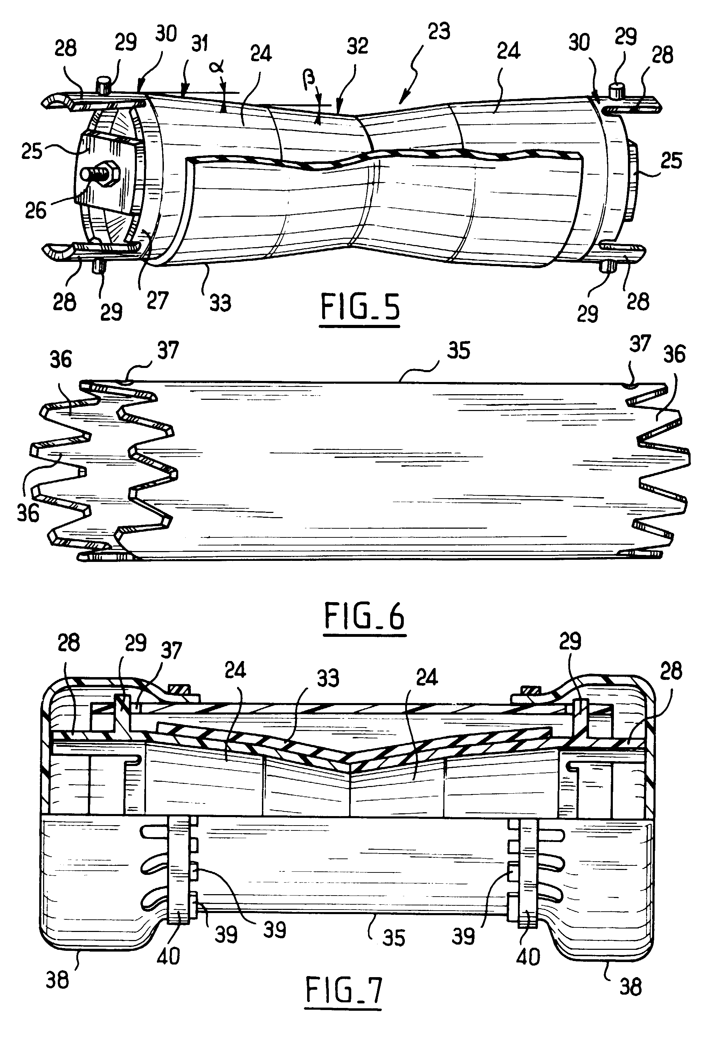

Dans le mode de réalisation illustré tel que représenté sur la figure 5, l'organe de maintien 23 comporte deux éléments tubulaires 24 identiques disposés en vis-en-vis et maintenus assemblés par des flasques 25 prenant appui sur les extrémités opposées des éléments tubulaires 24 et réunis par une tige filetée 26. Dans le mode de réalisation illustré chaque élément tubulaire 24 comporte une partie cylindrique 27 adjacente aux flasques 25 et à laquelle sont reliées deux languettes 28 s'étendant de façon symétrique par rapport à un axe longitudinal de l'élément 24, en porte-à-faux au-delà de l'extrémité de la partie 27. Les languettes 28 portent des ergots 29 s'étendant en saillie à distance d'une zone de flexion 30 de la languette 28 correspondante par rapport à l'élément 24. Par ailleurs, dans le mode de réalisation illustré, chaque élément 24 a une surface externe présentant une conicité progressivement croissante depuis les extrémités de l'organe de maintien vers la partie centrale de celui-ci. La partie conique 31 adjacente à la partie cylindrique 27 s'étend de préférence sur environ les deux tiers de la longueur de l'élément 24 et présente une conicité d'angle α de l'ordre de 1,5° tandis que la partie conique 32 qui lui est adjacente comporte une conicité plus forte d'angle β de l'ordre de 2°. On notera à ce propos que les conicités ont été fortement exagérées sur la figure.

Revenant aux figures 1 à 4, au départ d'un cycle de mise en expansion d'un manchon élastique les deux jeux de mors sont ramenés dans leur position centrale comme illustré pour le jeu de mors 12 sur la figure 1. Un manchon élastique 33 est monté par ses extrémités sur les deux jeux de mors et les mors du jeu de mors 3 sont écartés comme illustré sur la figure 1, réalisant ainsi une expansion mécanique de l'extrémité correspondante du manchon élastique 33. Le tube borgne 5 est alors avancé entre les mors du jeu de mors 3 en commandant le vérin 8 comme illustré sur la figure 2 jusqu'à ce que l'extrémité ouverte du tube borgne 5 s'étende à l'aplomb de l'organe de cerclage 11. Lors de ce mouvement, l'extrémité du manchon élastique 33 qui était montée sur le jeu de mors 3 s'échappe de celui-ci. Pour éviter une compression longitudinale du manchon élastique 33 qui pourrait entraîner une déformation de celui-ci, le bâti 13 est de préférence déplacé de façon correspondante dans la direction de déplacement du tube borgne 5. L'organe de cerclage 11 est alors appliqué sur l'extrémité correspondante du tube 33 afin de fermer celle-ci de façon étanche et éviter que celle-ci ne s'échappe du tube borgne 5 lors de la réalisation des opérations ultérieures. Une séquence d'opérations analogues est ensuite réalisée à l'extrémité opposée du manchon élastique 33 de façon à réaliser une expansion mécanique et fermer cette extrémité de façon étanche au moyen du tube borgne 14.

Ces opérations ayant été réalisées, le bâti 13 et les éléments qui lui sont associés sont déplacés de façon à exercer une traction longitudinale sur le manchon élastique 33. Un organe limiteur d'expansion 34 est ensuite monté autour du manchon élastique 33. L'organe limiteur d'expansion 34 est par exemple constitué par deux coquilles demi-cylindriques mises en place autour du manchon élastique 33 et rigidement reliées l'une à l'autre. Le dispositif se présente alors dans la position illustrée par la figure 3.

Dans cette position un gaz sous pression est introduit par le conduit d'alimentation 15 du tube borgne 14 et provoque l'expansion de la partie centrale du manchon 33 comme illustré par la figure 4. Le piston 10 est manoeuvré pour pousser l'organe de maintien 23 à l'intérieur du manchon élastique 33 comme également illustré par la figure 4. La conduite d'alimentation 15 du tube borgne 14 est ensuite mise à l'échappement, de sorte que la partie centrale du manchon élastique 33 vient en appui sur l'organe de maintien 23. L'organe limiteur d'expansion 34 est démonté et le bâti 13 est manoeuvré pour réduire la traction longitudinale sur le manchon élastique 33. Les organes de cerclage 11 et 19 sont manoeuvrés pour libérer les extrémités du manchon élastique 33 de sorte que celles-ci s'échappent des tubes borgnes 5 et 14 et se rétractent sous l'effet de la tension longitudinale résiduelle dans le manchon élastique 33 pour prendre la position illustrée par la figure 5. On notera à ce propos que l'organe de maintien 23 a une longueur suffisante pour que les ergots 29 ne soient pas recouverts par le manchon élastique à la fin du cycle d'expansion.

Un organe de verrouillage 35 tel qu'illustré par la figure 6 est alors mis en place autour du manchon élastique 33. Comme illustré par la figure 6, l'organe de verrouillage 35 est de préférence formé d'un tube cylindrique en matière plastique rigide ou semi-rigide dont les extrémités sont découpées pour délimiter des lamelles flexibles 36 de forme générale triangulaire. Le tube de verrouillage 35 comporte des lumières 37 réalisées dans une position correspondant sensiblement à la position des ergots 29 de l'organe de maintien de sorte que lorsque le tube de verrouillage 35 est engagé autour du manchon élastique 33, les lamelles 28 de l'organe de maintien 23 fléchissent et les ergots 29 viennent s'engager dans les lumières 37. L'organe de maintien étant ainsi verrouillé en position, les flasques 25 sont démontés et des couvercles 38 sont engagés sur les extrémités du tube de verrouillage 35.

Comme illustré par la figure 7, chaque couvercle 38 a de préférence une paroi latérale partiellement découpée pour délimiter des lamelles flexibles 39 maintenues appliquées sur le tube de verrouillage 35 par un anneau élastique 40.

Lors de l'utilisation, les anneaux élastiques 40 sont déplacés vers le milieu du tube de verrouillage 35, ce qui permet de retirer les couvercles 38. L'ensemble est mis en place sur l'article à protéger par le manchon élastique. Bien entendu dans le cas d'une jonction de câbles électriques l'ensemble est mis en place sur l'un des câbles avant la réalisation de la jonction et est ensuite ramené au niveau de celle-ci. Une pression est exercée sur les languettes 28 pour dégager les ergots 29 des lumières 37 du tube de verrouillage 35, ce qui permet un coulissement symétrique des deux éléments 24 de l'organe de maintien 23 par rapport au manchon élastique 33. Celui-ci se rétracte et les bagues élastiques sont alors de préférence ramenées au niveau des lamelles flexibles 36 du tube de verrouillage 35 pour mettre celles-ci en appui sur l'article recouvert du manchon élastique et assurer ainsi une fixation du tube de verrouillage 35 dans une position où il assure une protection mécanique du manchon élastique 33. La forme triangulaire des lamelles 36 permet une adaptation à des articles ayant un diamètre très inférieur à celui du tube 35. On notera que le tube 35 assure ainsi une triple fonction de verrouillage des organes de maintien dans l'état expansé du manchon élastique, de conditionnement du manchon élastique dans son état expansé, et de protection mécanique du manchon élastique dans son état rétracté.

Bien entendu l'invention n'est pas limitée au mode de réalisation décrit et on peut y apporter des variantes de réalisation sans sortir du cadre de l'invention tel que défini par les revendications.

En particulier, bien que le dispositif de maintien dans un état expansé selon l'invention ait été illustré avec un organe de maintien comportant deux éléments identiques, de section circulaire et disposés de façon symétrique particulièrement appropriée à la mise en place sur une jonction, on peut prévoir un organe de maintien comportant un élément unique en particulier dans le cas d'un manchon élastique destiné à recouvrir une extrémité de câble. On peut également prévoir un organe de maintien ayant une forme adaptée à l'article à recouvrir, par exemple une section ovale dans le cas où la jonction de câbles ou l'extrémité de câble comporte un boîtier d'épissurage de fibres optiques fixé sur le côté du câble et devant également être recouvert par le manchon élastique.

Bien que les moyens de fixation de l'organe de maintien à l'organe de verrouillage aient été illustrés sous forme de languettes réalisées en une seule pièce avec les éléments de l'organe de maintien, on peut prévoir des moyens de fixation rapportés de façon totalement indépendante ou fixés à l'organe de verrouillage.

Lorsque le manchon élastique comporte plusieurs couches séparables, on peut réaliser l'expansion de celui-ci soit en une seule opération soit en effectuant successivement la mise en place des différentes couches sur l'organe de maintien.

Bien que l'organe de verrouillage ait été illustré sous forme d'un tube permettant de réaliser successivement trois fonctions comme indiqué ci-dessus, l'organe de verrouillage peut avoir une structure quelconque, par exemple sous forme de barrettes séparées, disposées longitudinalement et équipées de moyens pour coopérer avec les deux extrémités de l'organe de maintien.

## Revendications

1. Dispositif de maintien en expansion d'un manchon élastique (3), ce dispositif comportant un organe de maintien tubulaire (23) disposé à l'intérieur du manchon élastique, caractérisé en ce qu'il comporte un organe de verrouillage (35) disposé à l'extérieur du manchon élastique (33), et des moyens de fixation amovibles (29, 37) de l'organe de maintien (23) à l'organe de verrouillage (35).

2. Dispositif selon la revendication 1, caractérisé en ce que les moyens de fixation amovibles comprennent des ergots (29) portés par des languettes (28) de l'organe de maintien (23) et coopérant avec des lumières (37) de l'organe de verrouillage (35).

3. Dispositif selon la revendication 2, caractérisé en ce que l'organe de maintien comporte deux languettes (28) disposées à chaque extrémité de façon symétrique par rapport à un axe longitudinal de l'organe de maintien.

4. Dispositif selon l'une quelconque des revendications 1 à 3, caractérisé en ce que l'organe de verrouillage (35) est tubulaire.

5. Dispositif selon la revendication 4, caractérisé en ce que l'organe de verrouillage (35) a des extrémités découpées pour délimiter des lamelles flexibles (36).

6. Dispositif selon la revendication 4 ou la revendication 5, caractérisé en ce qu'il comporte des couvercles (38) engagés sur les extrémités de l'organe de verrouillage (35) et ayant des parois latérales découpées maintenues sur l'organe de verrouillage (35) par des anneaux élastiques (40).

7. Procédé de mise en expansion d'un manchon élastique, caractérisé en ce qu'il comporte les étapes de réaliser une expansion mécanique des extrémités du manchon, fermer le manchon élastique de façon étanche, introduire du gaz sous pression à l'intérieur du manchon élastique pour provoquer son expansion, introduire un organe de maintien alors que le manchon élastique est en expansion, et mettre l'intérieur du manchon élastique à l'échappement.

8. Procédé selon la revendication 7, caractérisé en ce que préalablement à l'introduction d'un gaz sous pression, le manchon élastique (33) est soumis à une traction longitudinale.

9. Dispositif de mise en expansion d'un manchon élastique, caractérisé en ce qu'il comporte deux ensembles (1, 2) en vis-à-vis, comprenant chacun un jeu de mors (3, 13) mobiles radialement, un tube borgne (5, 14) monté pour coulisser par rapport au jeu de mors de façon à venir entre les mors lorsque ceux-ci sont dans une position écartée, et un organe de cerclage (11, 19) adjacent au jeu de mors, et en ce que l'un au moins des tubes borgnes (5, 14) est relié à une source de gaz sous pression.

10. dispositif selon la revendication 9, caractérisé en ce qu'il comporte un organe limiteur d'expansion (34) monté de façon amovible entre les organes de cerclage.
